# EUROPEAN PATENT SPECIFICATION

(11) **EP 2 403 692 B1**
(45) Date of publication and mention of the grant of the patent: **29.07.2015**
(21) Application number: 10708848.6
(22) Date of filing: 03.03.2010
(51) Int. Cl.: B26B 19/06, B26B 19/28, B26B 21/38, B26B 21/40

(54) **COMBINATION POWERED GROOMING DEVICE**
ANGETRIEBENE KOMBINATIONSPFLEGEVORRICHTUNG
DISPOSITIF DE TOILETTE COMBINÉ MÉCANIQUE

(30) Priority: 03.03.2009 US 156928 P
(43) Date of publication of application: 11.01.2012
(73) Proprietor: The Gillette Company, Boston, MA 02127 (US)
(72) Inventor: RONNEBERG, Gerrit, 64289 Darmstadt (DE); PEREZ LOPEZ, Cirilo Javier, 65760, Eschborn (DE); SCHUESSLER, Markus, 61462, Königstein (DE); FANDREY, Ulrich, 35578 Wetzlar (DE); MAICHEL, Michael, 60326 Frankfurt (DE); ROYLE, Terence Gordon, Basingstoke, Hampshire RG23 7AX (GB); REHBEIN, Stefan, 65812 Bad Soden (DE); KLUG, Ralf, 61476 Kronberg (DE); LARSCHEID, Andreas, 61476 Kronberg (DE); BEHRENDT, Jürgen, 65611 Niederbrechen (DE)
(74) Representative: Kohol, Sonia
(86) International application number: PCT/US2010/026021
(87) International publication number: WO 2010/101983

(56) References cited:
- EP-A1- 0 413 168
- WO-A1-2007/008520
- WO-A1-2007/130680
- WO-A1-2010/022011
- WO-A2-2005/102623
- WO-A2-2007/081850
- DE-A1-102007 005 853

## Description

### FIELD OF THE INVENTION

The invention relates to a combination powered grooming device.

### BACKGROUND OF THE INVENTION

Most consumers find that dealing with multiple grooming tools like a razor, scissors and an electric trimmer every time they want to change the look of their facial hair can be inconvenient. Moreover, traveling with all these different devices is cumbersome and takes up a lot of space. Thus, there is a need to provide a device which overcomes this practice of inconveniently handling multiple implements and combines a trimming device with the other grooming functionalities.

WO2007/130680 discusses a modular hair grooming tool comprising a razor assembly coupled to a first end of the hand-piece such that the razor assembly is removable, and a nose/ear hair trimmer coupled to the first end of the hand-piece. The nose/ear hair trimmer is configured to couple with the razor assembly to nest within the razor assembly while the razor assembly is coupled to the first end of the hand-piece.

WO2007/081850 discusses a multi-use shaving implement including an elongated handle and swappable razor cartridge and trimmer head. The elongated handle has a powered motor that is at least partially located therein. The razor cartridge has at least one elongated blade with a sharpened cutting edge and is removably attachable to the handle. The trimmer head has at least one stationary blade, one movable blade and is also removably attachable to the handle when the razor cartridge is not attached to the handle.

### SUMMARY OF THE INVENTION

In an aspect, the invention features, in general, a combination powered grooming device comprising a handle and a grooming attachment. The handle has a longitudinal axis extending between an upper end and a lower end. The handle comprises a trimmer assembly disposed adjacent the upper end and the trimmer assembly includes at least one moving blade. The handle further comprises an electrical arrangement disposed therein. The electrical arrangement comprises a motor having a drive shaft and a drive mechanism coupled to the drive shaft and to the trimmer assembly. In a trimming mode, the drive mechanism translates movement of the drive shaft to the moving blade. The grooming attachment is adapted for mounting onto the upper end.

In another aspect, the invention features, in general, a combination powered grooming device comprising a handle and a grooming attachment. The handle has a longitudinal axis extending between an upper end and a lower end. The handle comprises a trimmer assembly disposed adjacent the upper end and the trimmer assembly includes at least one moving blade. The handle further comprises an electrical arrangement disposed therein. The electrical arrangement comprises a motor having a drive shaft and a drive mechanism coupled to the drive shaft and to the trimmer assembly. In a trimming mode, the drive mechanism translates movement of the drive shaft to the moving blade. The grooming attachment is adapted for

mounting onto the upper end. The grooming attachment comprises a razor assembly including a cartridge connecting structure connected to a razor cartridge having at least one elongated blade mounted therein.

In yet another aspect, the invention features, in general, a method of using a combination powered grooming device. The method comprises providing a handle having a longitudinal axis extending between an upper end and a lower end. The handle comprises a trimmer assembly disposed adjacent the upper end and the trimmer assembly includes at least one moving blade. The handle further comprises an electrical arrangement disposed therein. The electrical arrangement comprises a motor having a drive shaft and a drive mechanism coupled to the drive shaft and to the trimmer assembly. In a trimming mode, the drive mechanism translates movement of the drive shaft to the moving blade. The method further comprises attaching a grooming attachment onto the upper end.

Other features and advantages of the invention will be apparent from the description and drawings, and from the claims.

### BRIEF DESCRIPTION OF THE DRAWINGS

FIG. 1 is a perspective view of a combination powered grooming device of the present invention which includes a grooming attachment mounted on a handle;
FIG. 1A is a cross-sectional view along I-I of FIG. 1;
FIG. 1B is a perspective view of the device of FIG. 1 with the grooming attachment separated from the handle;
FIG. 2A is a cross-sectional view along II-II of the handle of FIG. 1B in a trimming mode;
FIG. 2B is a cross-sectional view along II-II of the handle of FIG. 1B in a grooming mode;
FIG. 3 shows a partial cross-sectional view of a combination powered grooming device of the present invention with a trimmer comb attached;
FIG. 4A shows a front view of an embodiment of a motor, eccentric weight, and counterweight of the grooming device of FIG. 1 in the grooming mode;
FIG. 4B shows a front view of the embodiment in FIG. 4A in the trimming mode;
FIG. 4C shows a top view of the embodiment of FIG. 4A;
FIG. 4D shows a top view of the embodiment of FIG. 4B;
FIG. 5A shows a front view of an embodiment of an electrical arrangement, a trimmer assembly, and a decoupling mechanism of the grooming device of FIG. 1 in a trimming mode;
FIG. 5B shows a front view of the embodiment of FIG. 5A in the grooming mode;
FIG. 6A a front view of another embodiment of an electrical arrangement, a trimmer assembly, and a decoupling mechanism of the grooming device of FIG. 1 in the trimming mode;
FIG. 6B shows a front view of the embodiment of FIG. 6A in the grooming mode;
FIG. 7 shows a partial cross-sectional view of an embodiment of a combination powered grooming device of the present invention with a razor assembly;
FIG. 8 shows a partial cross-sectional view of another embodiment of a combination powered grooming device of the present invention with a dry shaver assembly;
FIG. 9 shows a partial cross-sectional view of another embodiment of a combination powered grooming device of the present invention with a toothbrush assembly;
FIG. 10 shows a partial cross-sectional view of an alternative embodiment of a combination powered grooming device of the present invention with a nose hair assembly;
FIG. 11 shows a partial cross-sectional view of an additional embodiment of a combination powered grooming device with an exfoliator assembly;
FIG. 12A shows a perspective view of an embodiment of the electrical arrangement and trimmer assembly in the trimming mode;
FIG. 12B shows a perspective view of the embodiment of FIG. 12A in the grooming mode;
FIG. 13A shows a front view of another embodiment in the trimming mode;
FIG. 13B shows a front view of the embodiment of FIG. 13A in the grooming mode;
FIG. 14A shows a partial cross-sectional view of another embodiment in the trimming mode;
FIG. 14B shows a partial cross-sectional view of the embodiment of FIG. 14A in the grooming mode;
FIG. 15A shows a partial cross-sectional view of an embodiment in the trimming mode;
FIG. 15B shows a partial cross-sectional view of the embodiment of FIG. 15A in the grooming mode;
FIG. 16A shows a partial cross-sectional view of an embodiment in the trimming mode; and
FIG. 16B shows a partial cross-sectional view of the embodiment of FIG. 16A in the grooming mode.

### DETAILED DESCRIPTION OF THE INVENTION

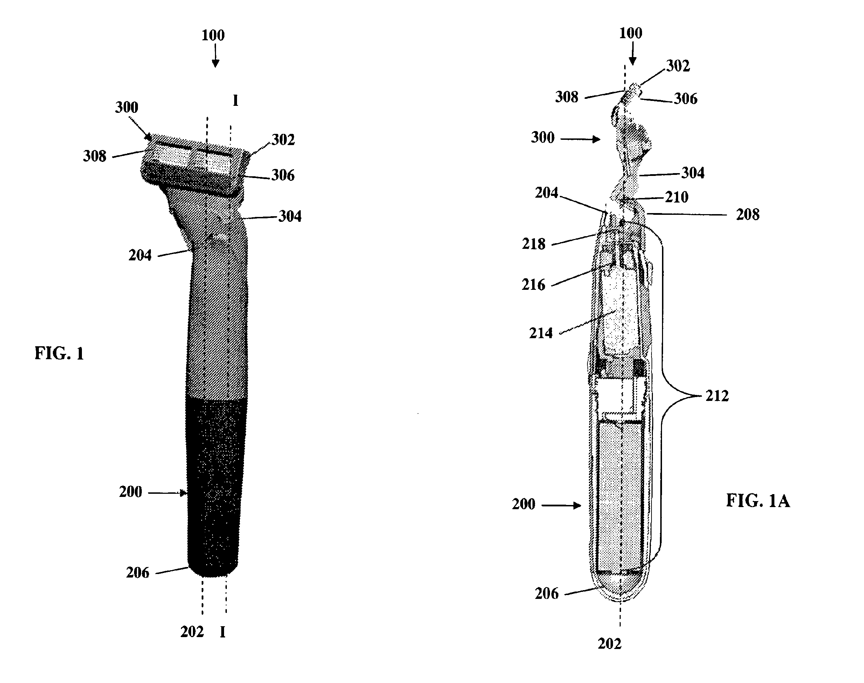

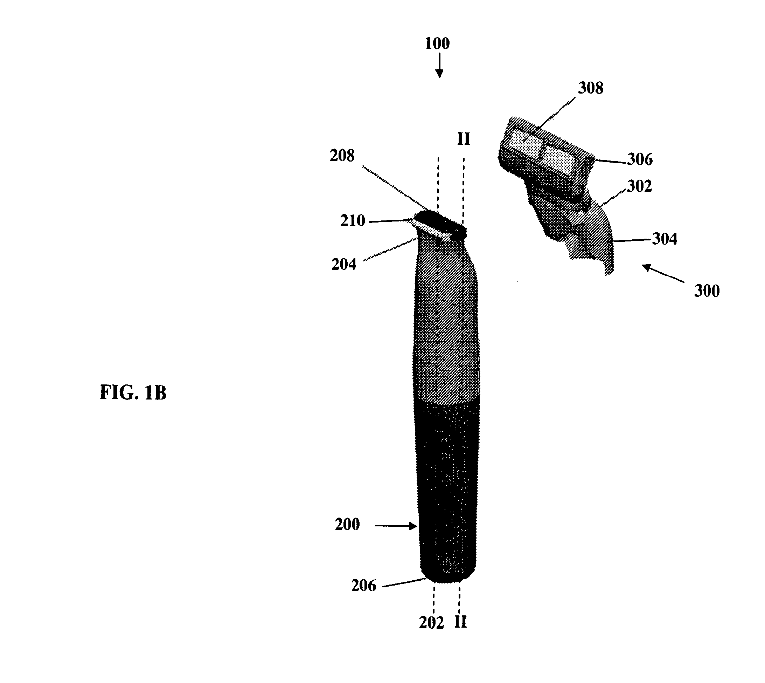

Referring to FIGs. 1-2B, the present disclosure shows a combination powered grooming device (100) that includes a handle (200) and a grooming attachment (300) mounted to the handle (200). FIG. 1A shows a cross-sectional view of the device of FIG. 1 taken along line I-I. The handle (200) has a longitudinal axis (202) that extends between an upper end (204) and a lower end (206). In an embodiment, the handle (200) may have a width of less than about 35 mm, or even less than about 27 mm. A trimmer assembly (208) is disposed adjacent the upper end (204) of the handle (200) and includes at least one moving blade (210). The handle (200) may be constructed to be held by a user during operation such that the internal components, i.e., an electrical arrangement (212), are impervious to liquids. The lower end (206) of the handle (200) may include a removably attached cap for accessing these components.

The electrical arrangement (212) is disposed in the handle (200) and is configured to supply power for operating the trimmer assembly (208). The electrical arrangement (212) includes a motor (214) and a drive mechanism (218). The motor (214) has a drive shaft (216) for driving the moving blade (210) and may also vibrate at least the handle (200). In an embodiment, the motor (214) has a diameter less than about 18 mm, a peak efficiency less than or equal to 55%, and an output torque less than about 0.8 mNm at peak efficiency.

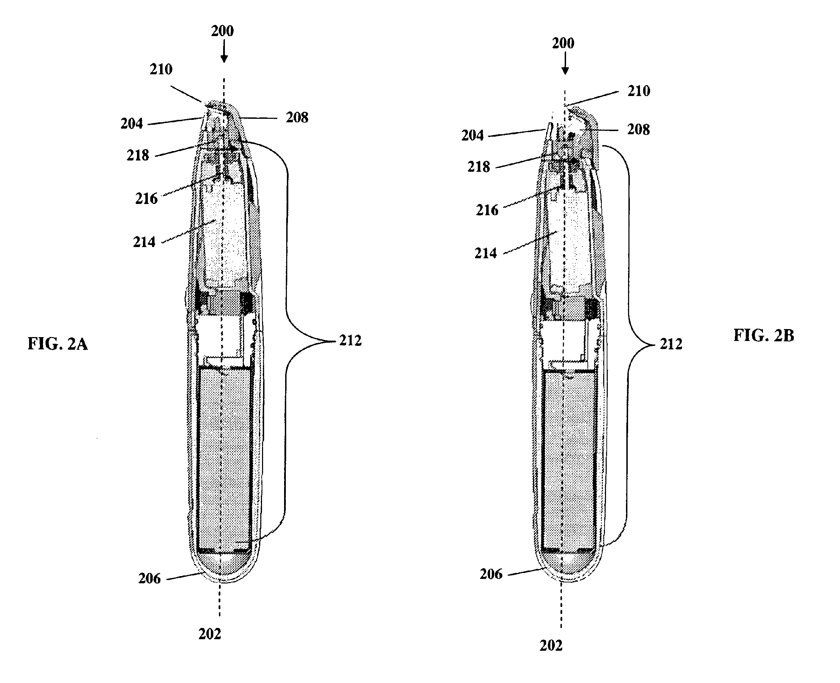

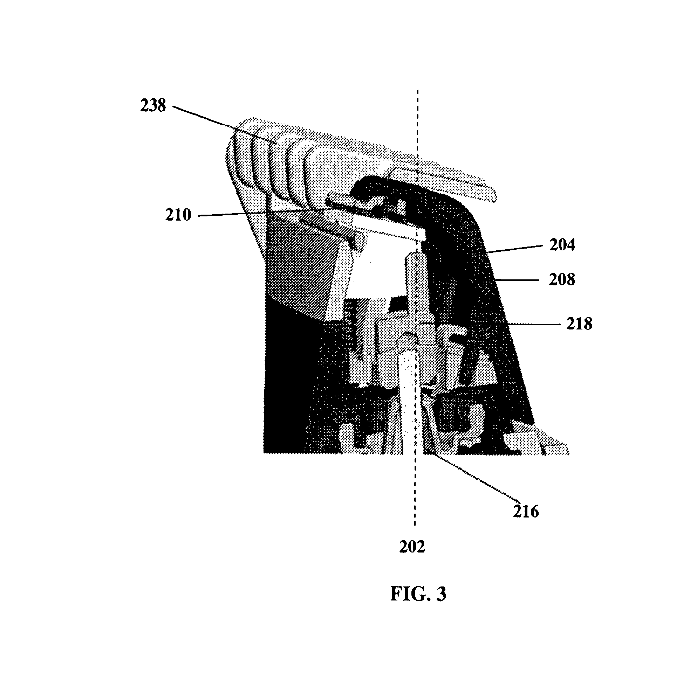

The drive mechanism (218) may be coupled to the drive shaft (216) and to the trimmer assembly (208). In a trimming mode, shown in FIG. 2A, the drive mechanism (218) is coupled to the trimmer assembly (208) and translates the rotational movement of the drive shaft (216) to lateral reciprocating movement of the moving blade (210). In the trimming mode, the trimmer assembly (208) functions as a powered trimmer that typically operates by reciprocally moving back and forth a moving blade (210). The moving blade typically (210) has a series of teeth that operate to cut hair in a scissoring fashion as the teeth of the moving blade (210) move past the teeth of the stationary teeth when the motor (214) is turned on. A trimmer comb (238) may be positioned over the trimmer assembly, as shown in FIG. 3, for trimming the hair to a desired length.

In a grooming mode, shown in FIG. 2B, the drive mechanism (218) is decoupled from the trimmer assembly (208) such that the drive shaft (216), with or without the drive mechanism (218) coupled, may rotate, but such movement is not translated to the moving blade (210). In this configuration, the motor (214) continues to operate, which vibrates at least the handle, but power is no longer supplied to the trimming assembly (208) thereby stopping the movement of the moving blade (210).

The electrical arrangement (212) may also include a power source, a controller, a printed circuit board ("PCB"), a switch, and a light operatively connected to the PCB. Various power sources, e.g., radiant, kinetic, potential, thermal, magnetic, gravitational, sound energy, light energy, electrical, electromagnetic, chemical source, and combinations thereof, may be used. The electrical arrangement (212) may also include an energy storage device, e.g., coin cell, double layer capacitor, solar cell, battery, or other suitable storage device. In an example, the energy storage can be configured to provide inductive charging via an external charging station. The handle (200) may include a switch disposed thereon such that the switch is in operative communication with the electrical arrangement (212). Additionally, the switch may be illuminated by a light source on the electrical arrangement (212).

As shown in FIGs. 1-1B, the grooming attachment (300) mounts onto the upper end (204) of the handle (200). This mounting can be accomplished by a snap-fit connection, an interference fit, or other suitable ways to secure the grooming attachment (300) to the handle (200). As shown, the grooming attachment (300) is a razor assembly (302) having a cartridge connecting structure (304) connected to a razor cartridge (306). The razor cartridge (306) includes at least one elongated blade (308) mounted therein. For example, U.S. Patent 7,168,173 generally describes a Fusion® razor with multiple blades and a stationary trimming blade that is commercially available from The Gillette Company. Additionally, U.S. Patent 6,185,823 describes a Venus® razor having an oval framed cartridge having multiple blades that is commercially available from the Gillette Company. The grooming attachment (300) may also include an ejection mechanism for removably attaching the razor cartridge (306) to the connecting structure (304).

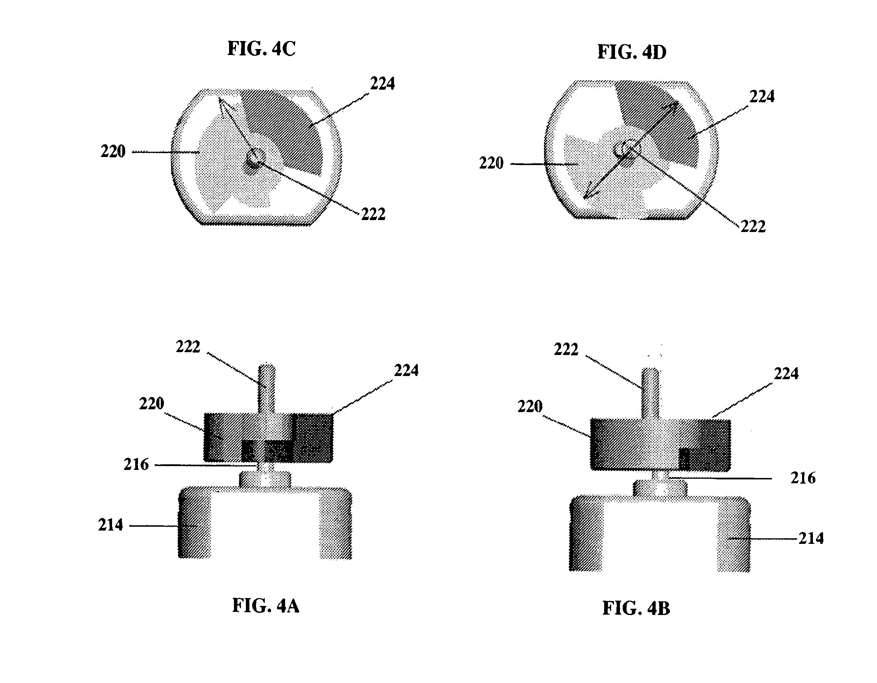

Referring to FIGs. 4A-4D, the drive shaft (216) may include an eccentric weight (220) mounted thereto. The eccentric weight (220) may vibrate at least the handle (200). Alternatively, the eccentric weight (220) may reduce the vibration about the trimmer assembly (208) by compensating for the movement of the moving blade (210). As shown, the eccentric weight (220) includes a crank lever (222) for driving the drive mechanism (218). In the trimming mode, the crank lever (222) translates the rotation of the drive shaft (216) to the drive mechanism (218) for operating the moving blade (210). In the grooming mode, the crank lever (222) is generally positioned above the drive shaft (216) and motor axis, so that the crank lever (222) rotates without cranking, i.e., the trimmer assembly (208) does not operate, but the handle (200) continues to vibrate.

A counterweight (224) may also be mounted to the drive shaft (216). In the trimming mode, shown in FIGs. 4B and 4D, the eccentric weight (220) and the counterweight (222) are at least substantially balanced so that the trimmer assembly (208) is driven by the crank lever (222). In the grooming mode, shown in FIGs. 4A and 4C, the eccentric weight (220) and the counterweight (222) are less than substantially balanced. Changing between the trimming mode and grooming mode can be done by changing the orientation of rotation of the motor (214). For example, a rotation in a clockwise direction causes the inertia moment of the eccentric weight (220) to fall into its balanced position. Rotation in a counterclockwise direction causes the inertia moment of the eccentric weight to move into its unbalanced position.

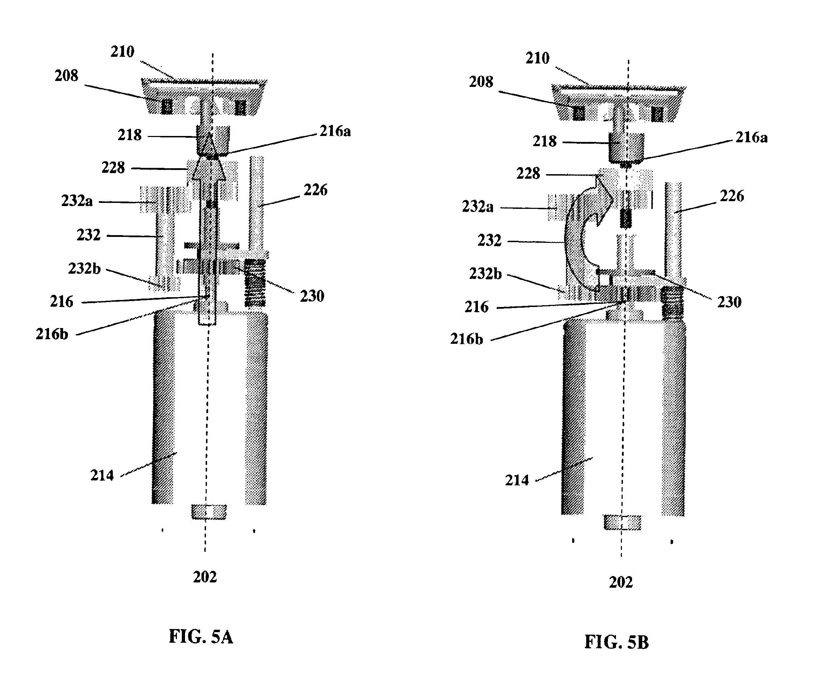

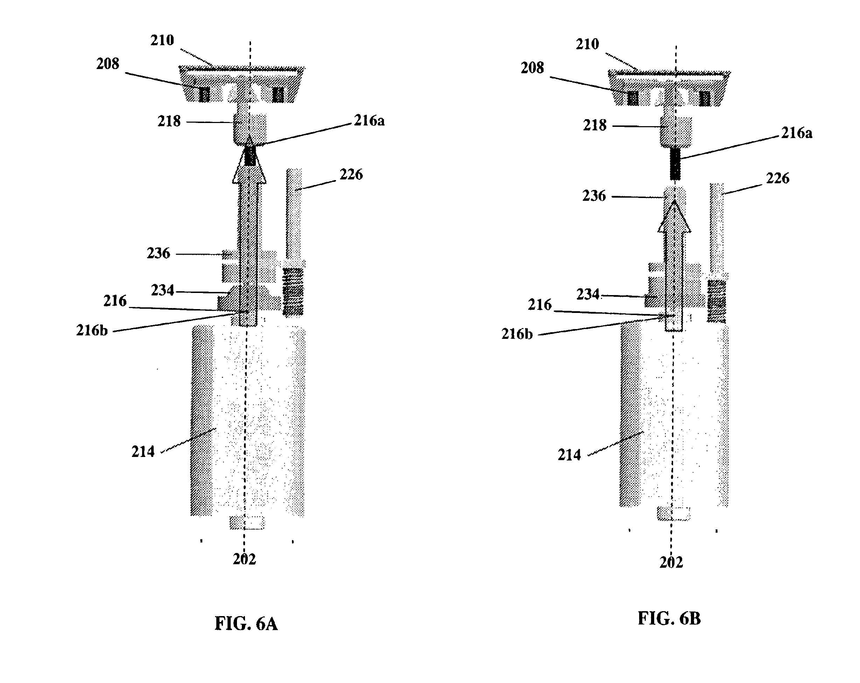

Referring to FIGs. 5A-6B, the handle (200) may include a decoupling mechanism (226) that is engageable by the grooming attachment (300). Engaging the decoupling mechanism (226) causes the drive mechanism (218) to decouple from either the trimmer assembly (208) and/or the entire drive shaft (216), thereby resulting in a grooming mode. For example, as depicted, the decoupling mechanism (226) is spring-loaded and movable in a direction generally parallel to the longitudinal axis (202). In the trimming mode, the decoupling mechanism (226) is in a rest position, shown in FIGs. 5A and 6A. Upon engagement with the grooming attachment (300), i.e., mounting the grooming attachment (300) over the trimmer assembly (208), the decoupling mechanism (226) is moved in a generally downward direction resulting in the grooming mode, shown in FIGs. 5B and 6B. Removing the grooming attachment (300) causes the spring to return the decoupling mechanism (226) back to the rest position. Other suitable ways, e.g., electrical or electromechanical, for decoupling the drive mechanism (226) from either the trimmer assembly (208) and/or the entire drive shaft (216) is also contemplated. Additionally, the drive shaft (216) may be separable into a top portion (216a) and bottom portion (216b).

Now referring to FIGs. 5A and 5B, the electrical arrangement (212) includes an eccentric weight (228) rotatably mounted to the top portion (216a) of the drive shaft (216), a first gear (230) mounted to the bottom portion (216b) of the drive shaft (216) and connected to the decoupling mechanism (226). The electrical arrangement (212) also includes a second gear (232), which has a top portion (232a) and a bottom portion (232b), positioned adjacent to the drive shaft (216). The eccentric weight (228) vibrates at least the handle (200) when the trimmer assembly (208) is in the grooming mode. In the trimming mode, as shown in FIG. 5A, rotation of the bottom portion (216b) is translated to the top portion (216a) and ultimately to the moving blade (208). However, in the trimming mode, the eccentric weight (228) does not rotate.

Engaging the decoupling mechanism (226) with the grooming attachment (300) causes a shift from the trimming mode, shown in FIG. 5A, to the grooming mode, shown in FIG. 5B. In the grooming mode, the top portion (216a) of the drive shaft (216) is separated from the bottom portion (216b) of the drive shaft (216), the bottom portion (232b) of the second gear (232) is engaged with the first gear (230) and the top portion (232a) of the second gear (232) is engaged with the eccentric weight (228). In this configuration, rotation of the first gear (230) is translated to the eccentric weight (228) by rotation of the second gear (232), thereby resulting in increased vibratory motion on at least the handle (200).

Referring to FIGs. 6A and 6B, the electrical arrangement (212) includes an eccentric weight (234) rotatably mounted to the bottom portion (216b) of the drive shaft (216). A movable device (236) is also mounted to the bottom portion (216b) of the drive shaft (216) adjacent to the eccentric weight (234). The eccentric weight (234) vibrates at least the handle (200) when the trimmer assembly (208) is in the grooming mode. In the trimming mode, as shown in FIG. 6A, the movable device (236) is slidably positioned along both the top (216a) and the bottom (216b) portions of the drive shaft (216) and is configured to translate the rotation of the bottom portion (216b) of the drive shaft (216) to the top portion (216a) of the drive shaft (216). In this configuration, the eccentric weight (234) does not rotate. Engaging the decoupling mechanism (226) with the grooming attachment (300), shown in FIG. 6B, causes a shift from the trimming mode to the grooming mode. In the grooming mode, the movable device (236) is slidably positioned along the bottom portion (216b) and engaged with the eccentric weight, thereby resulting in increased vibratory motion on at least the handle (200).

In addition, the device (100) may be arranged in a kit or package. The kit comprises the device of the present invention and an accessory selected from the group consisting of a cleaning brush, a trimmer comb, a cleaning solution, a cloth, a power cord, a battery, a cover, a razor cartridge, a lubricant, toothpaste, a fluid for applying to a user, and combinations thereof. Other suitable accessories are contemplated. Alternatively, the kit may comprise the device (100) and a grooming attachment selected from the group consisting of a razor assembly, a dry shaver assembly, a toothbrush assembly, a brush assembly, a nose hair trimmer assembly, an ear hair trimmer assembly, an exfoliator assembly, and combinations thereof.

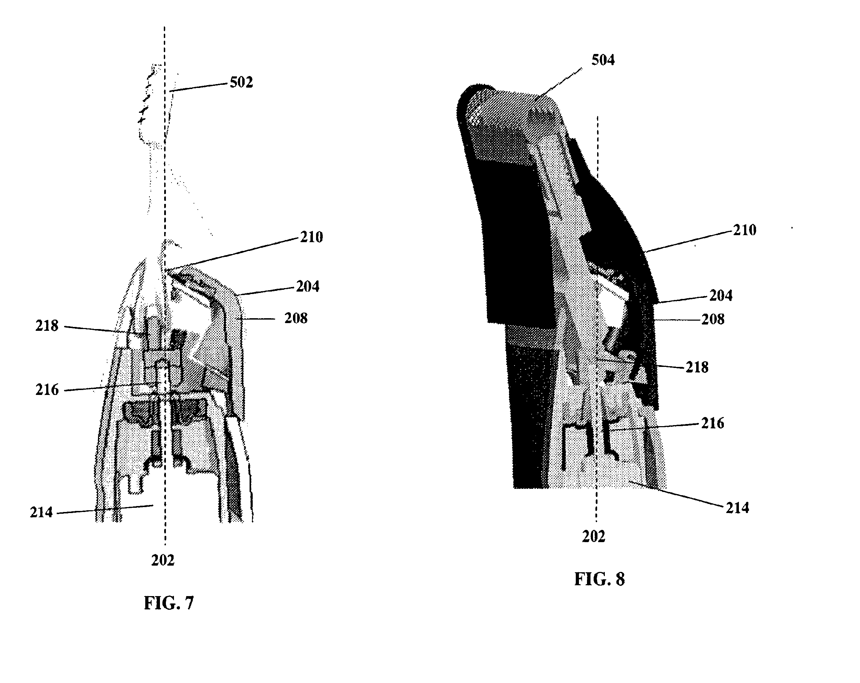

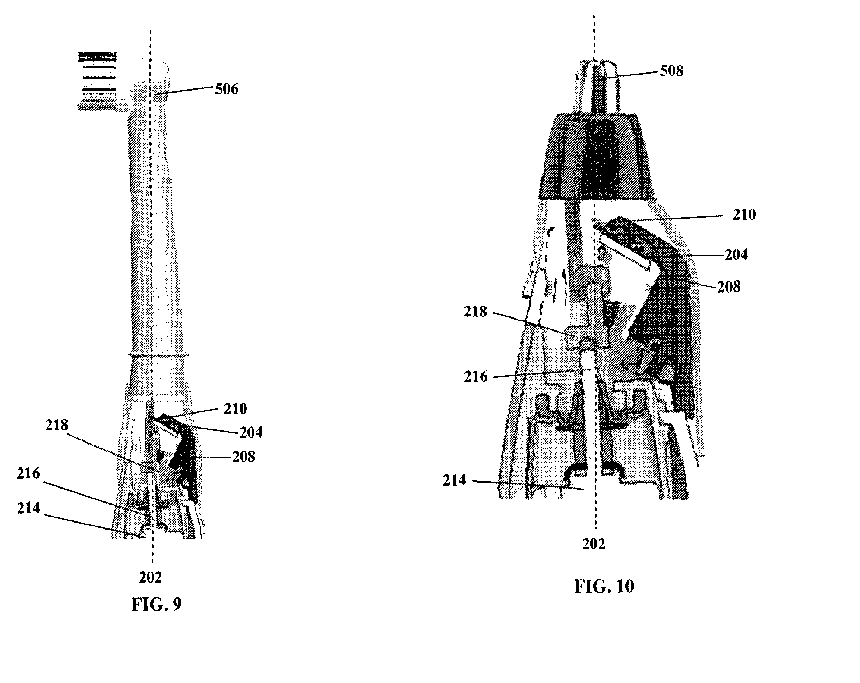

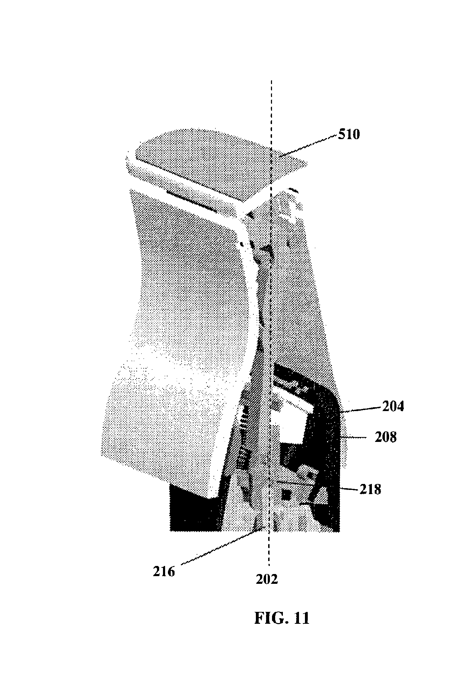

FIGs. 7-11 show other grooming attachments, e.g., a razor assembly (502), a dry shaver assembly (504), a toothbrush assembly (506), a nose hair trimmer assembly (508), an exfoliator assembly (510), and combinations thereof, that may be mounted onto the upper end (204). Other suitable grooming attachments may also be used. In some embodiments, the grooming attachment may be configured to couple with the drive mechanism (218) when the trimmer assembly (208) is in the grooming mode.

The present disclosure also features a method of using the combination powered grooming device. The method comprises providing a handle and attaching a grooming attachment onto the upper end. The handle has a longitudinal axis extending between an upper end and a lower end. The handle comprises a trimmer assembly disposed adjacent the upper end and the trimmer assembly having at least one moving blade. The handle has an electrical arrangement disposed therein. The electrical arrangement includes a motor having a drive shaft and a drive mechanism coupled to the drive shaft and to the trimmer assembly. In a trimming mode, the drive mechanism translates movement of the drive shaft to the moving blade.

The method may also include a subsequent step of decoupling the drive mechanism from the trimmer assembly or drive shaft which defines a grooming mode. The decoupling step may be performed in various ways, as shown in FIGs. 2A, 2B and 12A-16B. For example, the decoupling step (706) may be achieved by changing the rotation of the drive shaft from a forward direction to a reverse direction. Alternatively, the decoupling step (706) may be accomplished by moving the trimmer assembly in a direction generally transverse to the longitudinal axis, as shown in FIGs. 2A and 2B. FIG. 2A shows the trimmer assembly (208) in the trimming mode. Tilting the trimmer assembly (208) in a direction generally transverse to the longitudinal axis (202), shown in FIG. 2B, will decouple the drive mechanism (218) resulting in the grooming mode.

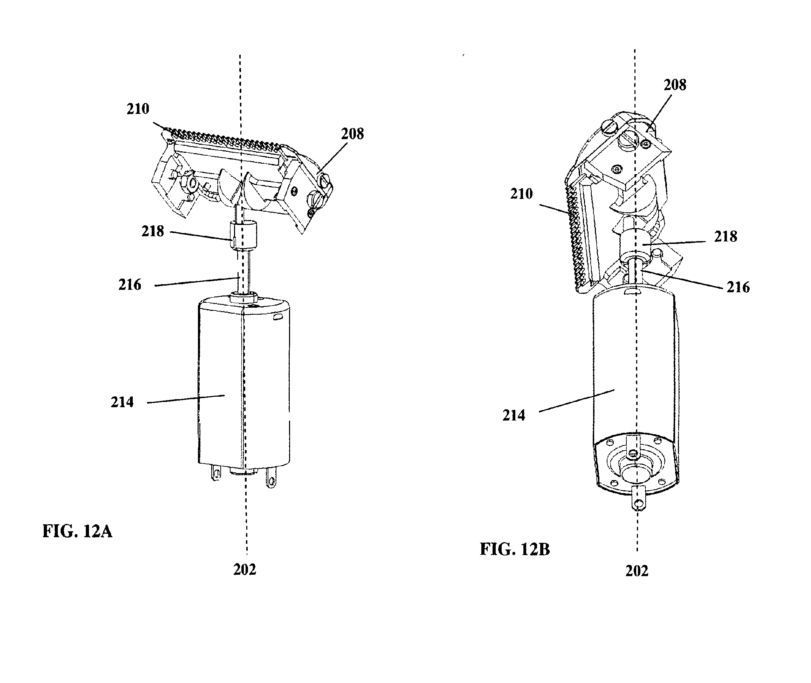

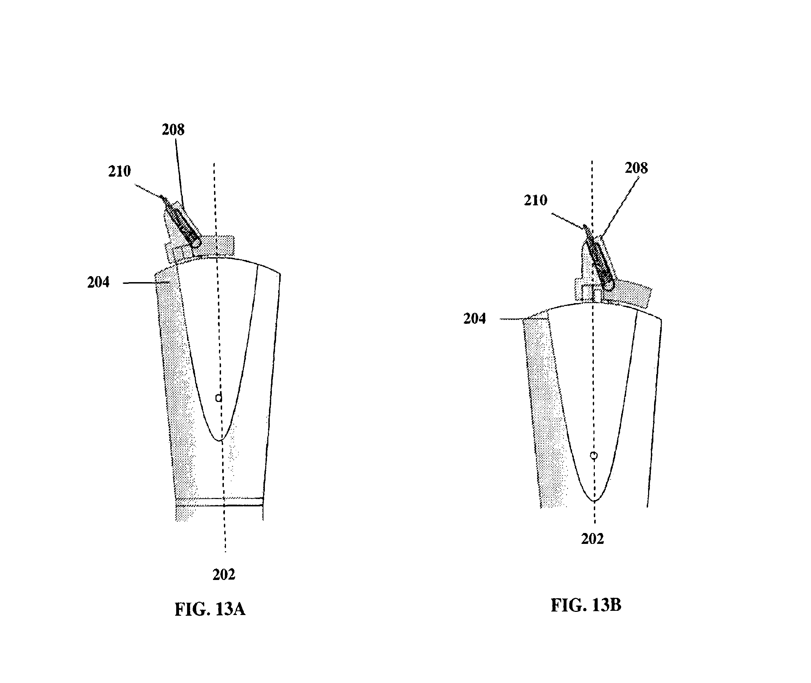

Referring to FIGs. 12A and 12B, the trimmer assembly (208) may be pivotable to provide for trimming at various angles. As shown, the trimmer assembly (208) is pivotable between a minimum and a maximum pivot angle. In the trimming mode, the trimmer assembly (208) is pivoted from the longitudinal axis (202) at an angle greater than about 15 degrees. In the grooming mode, the trimmer assembly (208) is positioned at an angle less than or equal to 15 degrees. Other angles are contemplated so long as the trimmer assembly (208) is decoupled in the grooming mode and operational in the trimming mode. Alternatively, FIG. 13A shows the trimmer assembly (208) in the trimming mode. The trimmer assembly (208) can be decoupled by sliding in a direction generally transverse to the longitudinal axis (202), shown in FIG. 13B.

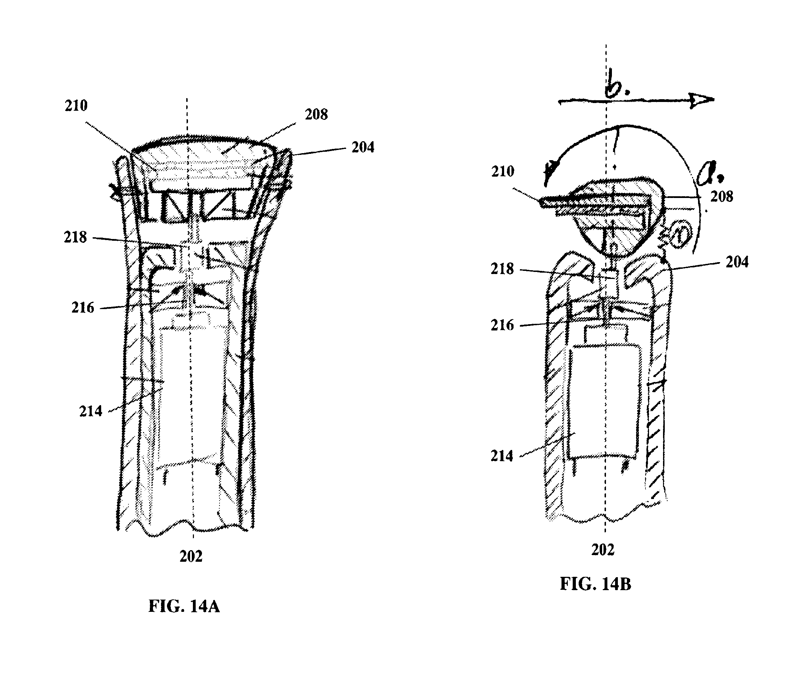

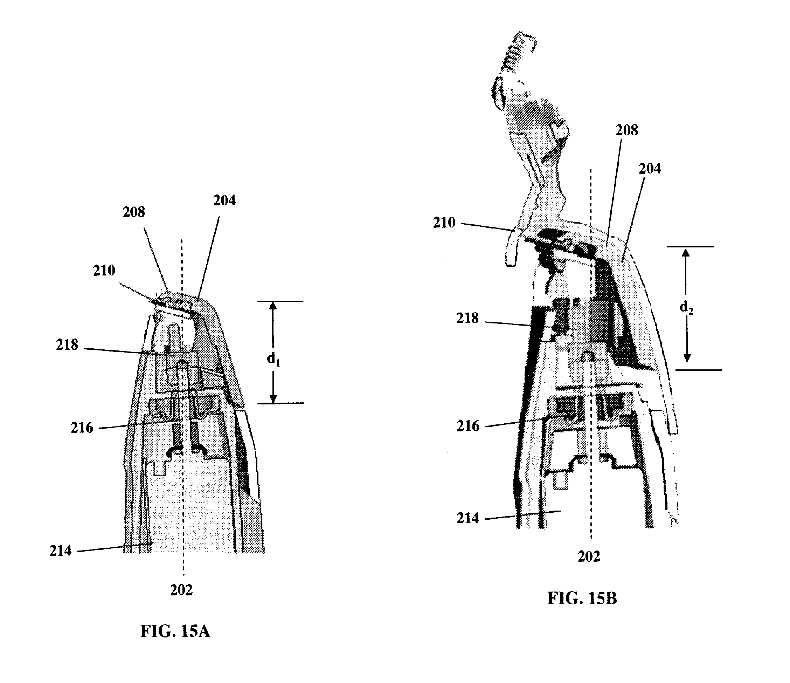

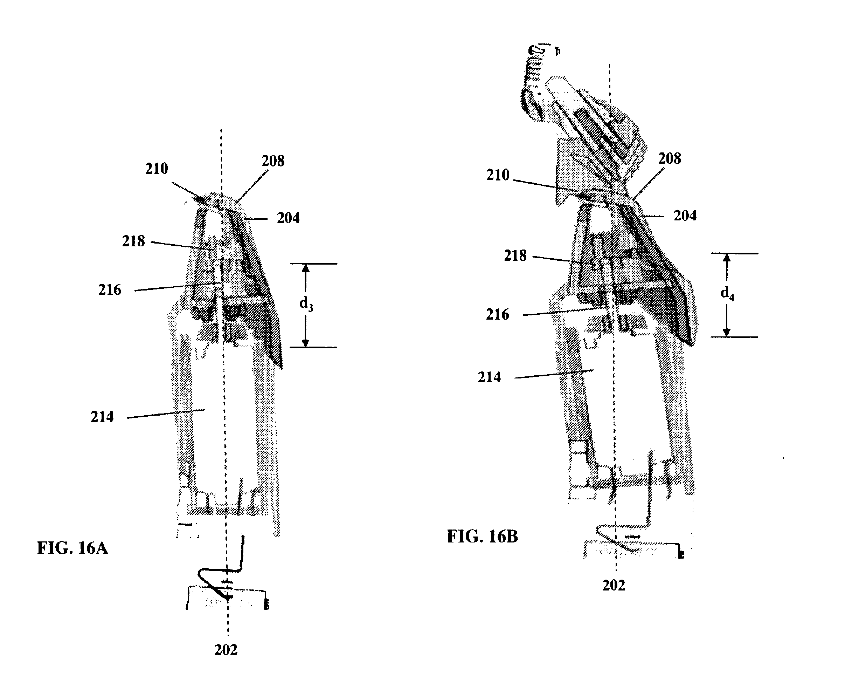

Referring to FIGs. 14A and 14B, the drive mechanism (218) may also be decoupled by rotating the trimmer assembly (208) about the longitudinal axis (202). Alternatively, as shown in FIGs. 15A and 15B, the trimmer assembly (208) may be moved in a direction generally parallel to the longitudinal axis (202) such that the distance (d₁) between the trimmer assembly (208) and the drive mechanism (216) in the trimming mode is less than the distance (d₂) of the trimmer assembly and the drive mechanism after decoupling. Now referring to FIGs. 16A and 16B, the motor (204) or any portion thereof may be moved in a direction generally parallel to the longitudinal axis (202) such that the distance (d₃) between the motor (214) and trimmer assembly (208) in the trimming mode is less than the distance (d₄) between the motor (214) and the trimmer assembly (208) after being decoupled.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

While particular embodiments of the present invention have been illustrated and described, it would be obvious to those skilled in the art that various other changes and modifications can be made without departing from the and scope of the appended claims.

## Claims

1. A combination powered grooming device (100) comprising:
a. a handle (200) having a longitudinal axis (202) extending between an upper end (204) and a lower end (206),
the handle comprising
1) a trimmer assembly (208) disposed adjacent the upper end, the trimmer assembly comprising at least one moving blade (210),
2) an electrical arrangement (212) disposed in the handle, the electrical arrangement comprising
a) a motor (214) having a drive shaft (216), and
b) a drive mechanism (218) coupled to the drive shaft and to the trimmer assembly,
wherein, in a trimming mode, the drive mechanism translates movement of the drive shaft to the moving blade; and
b. a grooming attachment (300) adapted for mounting onto the upper end (204), wherein the grooming attachment is selected from the group consisting of a razor assembly (502), a dry shaver assembly (504), a toothbrush assembly (506), a brush assembly, a nose hair trimmer assembly (508), an ear hair trimmer assembly, an exfoliator assembly (510), and combinations thereof, **characterised in that**
the grooming device further comprises a decoupling mechanism (226) engageable by the grooming attachment for decoupling the drive mechanism (218) from either the trimmer assembly (208) or the drive shaft (216), wherein decoupling the drive mechanism defines a grooming mode.

2. The grooming device of claim 1, further comprising an eccentric weight mounted on the drive shaft.

3. The grooming device of claim 2, further comprising a counterweight mounted to the drive shaft wherein, in the trimming mode, the weights are at least substantially balanced, and, in a grooming mode, the weights are less than substantially balanced.

4. The grooming device of claim 1, wherein the grooming attachment is configured to couple with the drive mechanism in the grooming mode.

5. The grooming device of claim 1, wherein the drive shaft comprises a top portion separable from a bottom portion.

6. The grooming device of claim 5, wherein the electrical arrangement further comprises:
a. an eccentric weight rotatably mounted to the top portion of the drive shaft, which vibrates at least the handle when the trimmer assembly is in the grooming mode,
b. a first gear mounted to the bottom portion of the drive shaft and connected to the decoupling mechanism, and
c. a second gear positioned adjacent the drive shaft, the second gear comprising a top portion and a bottom portion,
wherein engaging the decoupling mechanism with the grooming attachment results in the grooming mode defined by the top portion of the drive shaft separated from the bottom portion of the drive shaft, the bottom portion of the second gear engaged with the first gear, and the top portion of the second gear engaged with the eccentric weight, whereby rotation of the first gear is translated to the eccentric weight by rotation of the second gear.

7. The grooming device of claim 5, wherein the electrical arrangement further comprises:
a. an eccentric weight rotatably mounted to the bottom portion of the drive shaft, which vibrates at least the handle when the trimmer assembly is in the grooming mode, and
b. a movable device mounted to the bottom portion of the drive shaft adjacent the eccentric weight,
wherein, in the trimming mode, the movable device is slidably positioned along both the top and the bottom portions and is configured to translate the rotation of the bottom portion to the top portion, and
wherein engaging the decoupling mechanism with the grooming attachment results in the grooming mode defined by the movable device being slidably positioned along the bottom portion and engaged with the eccentric weight.

8. A kit comprising the grooming device of claim 1 and an accessory selected from the group consisting of a cleaning brush, a trimmer comb, a cleaning solution, a cloth, a power cord, a battery, a cover, a plurality of razor cartridges, a razor cartridge dispenser, a lubricant, toothpaste, a fluid for applying to a user, a stand, a charging station, and combinations thereof.

9. The grooming device of claim 1, wherein :
the grooming attachment is a razor assembly, the razor assembly including a cartridge connecting structure connected to a razor cartridge, wherein the razor cartridge comprises at least one elongated blade mounted therein.

10. The grooming device of claim 10, wherein the
grooming attachment is configured to couple with the drive mechanism in the grooming mode.

## Patentansprüche

1. Motorbetriebene Kombinationspflegevorrichtung (100), die Folgendes umfasst:
a. einen Griff (200) mit einer Längsachse (202), die sich zwischen einem oberen Ende (204) und einem unteren Ende (206) erstreckt,
wobei der Griff Folgendes umfasst
1) einen Schneidmesseraufbau (208), der neben dem oberen Ende angeordnet ist und mindestens eine sich bewegende Klinge (210) aufweist,
2) eine elektrische Anordnung (212), die in dem Griff angeordnet ist und Folgendes umfasst
a) einen Motor (214) mit einer Antriebswelle (216), und
b) einen mit der Antriebswelle und mit dem Schneidmesseraufbau g ekoppelten Antriebsmechanismus (218),
wobei der Antriebsmechanismus in einem Schneidmodus die Bewegung der Antriebswelle zu der sich bewegenden Klinge überträgt; und
b. ein Pflegezubehörteil (300), das zum Anbringen am oberen Ende (204) ausgelegt ist, wobei das Pflegezubehörteil ausgewählt ist aus der Gruppe bestehend aus einem Rasiereraufbau (502), einem Trockenrasiereraufbau (504), einem Zahnbürstenaufbau (506), einem Bürstenaufbau, einem Nasenhaarschneideraufbau (508), einem Ohrhaarschneideraufbau, einem Peelingaufbau (510) und Kombinationen davon, **dadurch gekennzeichnet, dass** die Pflegevorrichtung ferner einen Abkopplungsmechanismus (226) umfasst, der durch das Pflegezubehörteil in Eingriff gebracht werden kann, um den Antriebsmechanismus (218) entweder vom Schneidmesseraufbau (208) oder von der Antriebswelle (216) abzukoppeln, wobei das Abkoppeln des Antriebsmechanismus einen Pflegemodus definiert.

2. Pflegevorrichtung nach Anspruch 1, die ferner ein an der Antriebswelle angebrachtes Exzentergewicht umfasst.

3. Pflegevorrichtung nach Anspruch 2, die ferner ein an der Antriebswelle angebrachtes Gegengewicht umfasst, wobei die Gewichte im Schneidmodus mindestens im Wesentlichen ausgeglichen sind und in einem Pflegemodus weniger als im Wesentlichen ausgeglichen sind.

4. Pflegevorrichtung nach Anspruch 1, wobei das Pflegezubehörteil dazu ausgelegt ist, im Pflegemodus an den Antriebsmechanismus gekoppelt zu werden.

5. Pflegevorrichtung nach Anspruch 1, wobei die Antriebswelle einen oberen Abschnitt umfasst, der von einem unteren Abschnitt abtrennbar ist.

6. Pflegevorrichtung nach Anspruch 5, wobei die elektrische Anordnung ferner Folgendes umfasst:
a. ein Exzentergewicht, das drehbar am oberen Abschnitt der Antriebswelle angebracht ist und das zumindest den Griff in Vibration versetzt, wenn der Schneidmesseraufbau im Pflegemodus ist,
b. ein erstes Getriebe, das am unteren Abschnitt der Antriebswelle angebracht ist und mit dem Abkopplungsmechanismus verbunden ist, und
c. ein zweites Getriebe, das neben der Antriebswelle angeordnet ist, wobei das zweite Getriebe einen oberen Abschnitt und einen unteren Abschnitt umfasst,
wobei das Ineingriffbringen des Abkopplungsmechanismus mit dem Pflegezubehörteil zum Pflegemodus führt, dadurch definiert, dass der obere Abschnitt der Antriebswelle vom unteren Abschnitt der Antriebswelle getrennt ist, der untere Abschnitt des zweiten Getriebes mit dem ersten Getriebe in Eingriff steht und der obere Abschnitt des zweiten Getriebes mit dem Exzentergewicht in Eingriff steht, wodurch die Drehung des ersten Getriebes durch Drehung des zweiten Getriebes zum Exzentergewicht übertragen wird.

7. Pflegevorrichtung nach Anspruch 5, wobei die elektrische Anordnung ferner Folgendes umfasst:
a. ein Exzentergewicht, das drehbar am unteren Abschnitt der Antriebswelle angebracht ist und das zumindest den Griff in Vibration versetzt, wenn der Schneidmesseraufbau im Pflegemodus ist, und
b. eine bewegliche Vorrichtung, die an dem unteren Abschnitt der Antriebswelle neben dem Exzentergewicht angebracht ist,
wobei die bewegliche Vorrichtung im Schneidmodus sowohl entlang dem oberen als auch entlang dem unteren Abschnitt verschiebbar angeordnet ist und dazu ausgelegt ist, die Drehung des unteren Abschnitts zum oberen Abschnitt zu übertragen, und
wobei das Ineingriffbringen des .4bkopplungsmechanismus durch das Pflegezubehörteil zum Pflegemodus führt, dadurch definiert, dass die bewegliche Vorrichtung entlang dem unteren Abschnitt verschiebbar angeordnet ist und mit dem Exzentergewicht in Eingriff steht.

8. Kit, das die Pflegevorrichtung nach Anspruch 1 und Zubehör umfasst, das ausgewählt ist aus der Gruppe bestehend aus einer Reinigungsbürste, einem Schneidkamm, einer Reinigungslösung, einem Tuch, einem Spanungsversorgungskabel, einer Batterie, einer Abdeckung, einer Vielzahl von Rasierklingeneinsätzen, einem Rasierklingeneinsatzspender, einem Gleitmittel, Zahnpasta, einem Fluid zur Anwendung bei einem Benutzer, einem Ständer, einer Ladestation und Kombinationen davon.

9. Pflegevorrichtung nach Anspruch 1, wobei:
es sich bei dem Pflegezubehörteil um einen Rasiereraufbau handelt, wobei der Rasiereraufbau eine mit einem Rasierklingeneinsatz verbundene Einsatzverbindungsstruktur aufweist, wobei der Rasierklingeneinsatz mindestens eine längliche, darin angebrachte Klinge umfasst.

10. Pflegevorrichtung nach Anspruch 10, wobei das Pflegezubehörteil dazu ausgelegt ist, im Pflegemodus an den Antriebsmechanismus gekoppelt zu werden.

## Revendications

1. Dispositif de toilettage motorisé combiné (100) comprenant :
a. un manche (200) possédant un axe longitudinal (202) s'étendant entre une extrémité supérieure (204) et une extrémité inférieure (206),
le manche comprenant
1) un ensemble de tondeuse (208) disposé adjacent à l'extrémité supérieure, l'ensemble de tondeuse comprenant au moins une lame mobile (210),
2) un ordonnancement électrique (212) disposé dans le manche, l'ordonnancement électrique comprenant
a) un moteur (214) possédant un arbre d'entraînement (216), et
b) un mécanisme d'entraînement (218) couplé à l'arbre d'entraînement et à l'ensemble de tondeuse,
dans lequel, dans un mode de tondeuse, le mécanisme d'entraînement transmet le mouvement de l'arbre d'entraînement à la lame mobile ; et
b. un accessoire de toilettage (300) adapté pour montage sur l'extrémité supérieure (204), dans lequel l'accessoire de toilettage est choisi dans le groupe constitué d'un ensemble de rasoir (502), un ensemble de rasoir à sec (504), un ensemble de brosse à dents (506), un ensemble de brosse, un ensemble de tondeuse pour poils du nez (508), un ensemble de tondeuse pour poils des oreilles, un ensemble d'exfoliation (510), et leurs combinaisons, **caractérisé en ce que** le dispositif de toilettage comprend en outre un mécanisme de découplage (226) pouvant venir en prise avec l'accessoire de toilettage pour découplage du mécanisme d'entraînement (218) ou de l'ensemble de tondeuse (208) ou de l'arbre d'entraînement (216), dans lequel le découplage du mécanisme d'entraînement définit un mode de toilettage.

2. Dispositif de toilettage selon la revendication 1, comprenant en outre un poids excentrique monté sur l'arbre d'entraînement.

3. Dispositif de toilettage selon la revendication 2, comprenant en outre un contrepoids monté sur l'arbre d'entraînement, dans lequel, dans le mode de tondeuse, les poids sont au moins essentiellement équilibrés et, dans un mode de toilettage, les poids sont moins qu'essentiellement équilibrés.

4. Dispositif de toilettage selon la revendication 1, dans lequel l'accessoire de toilettage est conçu pour s'accoupler au mécanisme d'entraînement dans le mode de toilettage.

5. Dispositif de toilettage selon la revendication 1, dans lequel l'arbre d'entraînement comprend une partie supérieure séparable d'une partie inférieure.

6. Dispositif de toilettage selon la revendication 5, dans lequel l'ordonnancement électrique comprend en outre :
a. un poids excentrique monté rotatif sur la partie supérieure de l'arbre d'entraînement, lequel fait vibrer au moins le manche lorsque l'ensemble de tondeuse est dans le mode de toilettage,
b. un premier engrenage monté sur la partie inférieure de l'arbre d'entraînement et attaché au mécanisme de découplage, et
c. un deuxième engrenage positionné adjacent à l'arbre d'entraînement, le deuxième engrenage comprenant une partie supérieure et une partie inférieure,
dans lequel la mise en prise du mécanisme de découplage avec l'accessoire de toilettage entraîne le mode de toilettage défini par la partie supérieure de l'arbre d'entraînement séparé de la partie inférieure de l'arbre d'entraînement, la partie inférieure du deuxième engrenage en prise avec le premier engrenage et la partie supérieure du deuxième engrenage en prise avec le poids excentrique, moyennant quoi la rotation du premier engrenage est transmise au poids excentrique par la rotation du deuxième engrenage.

7. Dispositif de toilettage selon la revendication 5, dans lequel l'ordonnancement électrique comprend en outre :
a. un poids excentrique monté rotatif sur la partie inférieure de l'arbre d'entraînement, lequel fait vibrer au moins le manche lorsque l'ensemble de tondeuse est dans le mode de toilettage, et
b. un dispositif mobile monté sur la partie inférieure de l'arbre d'entraînement adjacente au poids excentrique,
dans lequel, dans le mode de tondeuse, le dispositif mobile est positionné d'une manière coulissante le long de l'une et l'autre des parties supérieure et inférieure et est conçu pour transmettre la rotation de la partie inférieure à la partie supérieure, et
dans lequel la mise en prise du mécanisme de découplage avec l'accessoire de toilettage fait en sorte que le mode de toilettage défini par le dispositif mobile est positionné de manière coulissante le long de la partie inférieure et en prise avec le poids excentrique.

8. Trousse comprenant le dispositif de toilettage selon la revendication 1 et un accessoire choisi dans le groupe constitué d'une brosse de nettoyage, un peigne de tondeuse, une solution de nettoyage, un chiffon, un câble d'alimentation, une batterie, un couvercle, une pluralité de cartouches de rasoir, un distributeur de cartouches de rasoir, un lubrifiant, de la pâte dentifrice, un fluide pour application sur un utilisateur, un support, un poste de chargement, et leurs combinaisons.

9. Dispositif de toilettage selon la revendication 1, dans lequel :
l'accessoire de toilettage est un ensemble de rasoir, l'ensemble de rasoir incluant une structure de connexion de cartouche attachée à une cartouche de rasoir, dans lequel la cartouche de rasoir comprend au moins une lame allongée montée à l'intérieur de celle-ci.

10. Dispositif de toilettage selon la revendication 10, dans lequel l'accessoire de toilettage est conçu pour s'accoupler au mécanisme d'entraînement dans le mode de toilettage.
